# EUROPÄISCHE PATENTSCHRIFT

(11) **EP 3 551 516 B1**
(45) Veröffentlichungstag und Bekanntmachung des Hinweises auf die Patenterteilung: **21.10.2020**
(21) Anmeldenummer: 17800537.7
(22) Anmeldetag: 17.11.2017
(51) Int. Cl.: B60T 13/567

(54) **BAUKASTENOPTIMIERTER PNEUMATISCHER BREMSKRAFTVERSTÄRKER**
VACUUM BRAKE BOOSTER OPTIMISED FOR MODULARITY
SERVOFREIN PNEUMATIQUE OPTIMISÉ POUR MODULARITÉ

(30) Priorität: 12.12.2016 DE 102016224715
(43) Veröffentlichungstag der Anmeldung: 16.10.2019
(73) Patentinhaber: Continental Teves AG & Co. OHG, 60488 Frankfurt am Main (DE)
(72) Erfinder: FALLER, Jürgen, 63796 Kahl (DE)
(86) Internationale Anmeldenummer: PCT/EP2017/079609
(87) Internationale Veröffentlichungsnummer: WO 2018/108450

(56) Entgegenhaltungen:
- DE-A1- 10 218 762
- DE-A1- 10 260 190
- US-A- 3 109 346

## Beschreibung

Die Erfindung betrifft einen pneumatischen Bremskraftverstärker insbesondere für eine hydraulische Kraftfahrzeugbremsanlage mit Merkmalen nach dem Oberbegriff des Anspruchs 1.

Derartige Bremskraftverstärker sind weit verbreitet und bekannt. Das Verstärkergehäuse von einem derartigen Bremskraftverstärkerweise meist wenigstens zwei dünnwandige Gehäuseschalen auf, welche miteinander verbunden oder aneinander fixiert beziehungsweise gekoppelt sind. In dem Verstärkergehäuse ist dabei wenigstens eine Unterdruckkammer von einer Arbeitskammer durch eine Membrane aus Elastomerwerkstoff pneumatisch getrennt. Die Membrane liegt dabei bereichsweise an einem steifen Membranteller auf, der im Betrieb über einen konstruktiv definierten Hubbereich axiale verfahrbar ist.

Zum Ausgleich der Axialbewegung verfügt die Membrane über einen Rollfalte, die radial außen, zwischen dem Membranteller und der Innenwandung des Verstärkergehäuses angeordnet ist und im Betrieb an einem Abrollbereich an der Innenwandung des Verstärkergehäuses abrollt.

Die projizierte Auflagefläche der Membrane am Membranteller fungiert als eine zur Aufbau der Verstärkungskraft pneumatisch wirksame Fläche und beeinflusst maßgeblich den Wirkungsgrad des Bremskraftverstärkers. Es wird daher bestrebt, den radialen Abstand zwischen dem Membranteller und dem Verstärkergehäuse über den gesamten Hubbereich möglichst gering zu halten, daher ist das Verstärkergehäuse der bekannten pneumatischen Bremskraftverstärker im Abrollbereich zylindrisch oder leicht kegelig mit einer minimalen, herstellungsbedingten Ausformschräge meist in einem Bereich zwischen 1° bis 2° ausgeführt oder leicht darüber, wenn beispielsweise die Stapelbarkeit von Schalenhalbzeugen für Transport und Lagerung effizienter gestaltet werden soll. Zum relevanten Stand der Technik wird dabei beispielhaft auf DE 10218762 A1 verwiesen.

Für verschiedene Fahrzeugapplikationen werden Bremskraftverstärker mit unterschiedlichen Hubbereichen benötigt. Zwecks Kosteneinsparung strebt man an, dies anhand eines Baukastensystems zu realisieren, indem nur einige wenige Komponenten geändert oder ausgetauscht werden müssen, beispielsweise einer axial tieferen Gehäuseschale für einen größeren Hubbereich und vice versa. Bei dieser Methode muss bei den bekannten Bremskraftverstärkern auch die Membrane geändert beziehungsweise in mehreren Ausführungen vorliegen.

So würde beispielsweise die Rollfalte einer für einen langhubigen Bremskraftverstärker ausgelegten Membrane bei kleinhubigen Bremskraftverstärkern auch bei deren Maximalhüben eine große Blase bilden, wodurch das Volumen der Unterdruckkammer ungünstig verringert und das der Arbeitskammer vergrößert wird. Dadurch werden jedoch der Wirkungsgrad und die Höhe der erreichbaren Verstärkungskraft verringert sowie das Ansprechverhalten verschlechtert.

Bei der Verwendung einer für einen kleinhubigen Bremskraftverstärker ausgelegten Membrane bei langhubigen Bremskraftverstärkern würde die Membrane bei Maximalhub nicht mehr vollständig am Membranteller anliegen, sich davon abheben, dadurch die pneumatisch wirksame Fläche reduzieren und als Konsequenz ebenfalls den Wirkungsgrad und die Höhe der erreichbaren Verstärkungskraft absenken.

Es stellt sich somit die Aufgabe eine Lösung anzubieten, bei dem ein Baukastensystem für mehrere Hubbereiche effizienter gebildet und der Wirkungsgradverlust möglichst gering gehalten oder vermieden werden sollen.

Die Aufgabe wird erfindungsgemäß durch einen Bremskraftverstärker mit der Merkmalskombination nach dem Anspruch 1 gelöst. Unteransprüche zusammen mit Figuren und Beschreibungen geben weitere erfindungsgemäße Ausführungsformen und vorteilhafte Weiterbildungen an.

Die Erfindung sieht vor, dass das Verstärkergehäuse im Abrollbereich einen angeschrägten, insbesondere kegeligen Abschnitt mit einem Kegelwinkel größer als 8° und einer Axialstreckung größer als ein Drittel des jeweiligen Hubbereichs aufweist. In einer Weiterbildung der Erfindung wird der Kegelwinkel des entsprechenden Abschnitts des Verstärkergehäuses im Abrollbereich in einem Bereich zwischen 8° und 10° und bevorzugt in einem Bereich zwischen 8,5° und 9° vorgesehen.

Die Länge der Rollfalte bei kleinhubigen Ausführungen des Bremskraftverstärkers kann dadurch kleiner gewählt werden, womit beim Hub ein kleinerer Bereich verformt werden muss, die Walkarbeit und damit einhergehenden Verluste werden verringert. Dadurch kann eine einzige standardisierte Ausführung eine Membrane für alle Hubbereiche innerhalb eines Baukastens eingesetzt werden. Die Teilevielfalt der Rollmembrane wird reduziert und dadurch auch der Teilepreis
Der Umformgrad des Bleches bei der Herstellung einer Gehäuseschale wird im Vergleich zu einer zylindrischen Ausführung verringert und die Herstellkosten reduziert.

Zudem werden die Gehäuseschalen besser stapelbar, wodurch. der benötigte Raum für den Transport verringert wird oder größere Wandstärken ermöglicht werden . Hierdurch werden die Logistikkosten gesenkt.

Eine Weiterbildung der Erfindung sieht vor, dass ein radialer Abstand zwischen dem Membranteller und dem Abrollbereich bei Maximalhub sich mindestens aus einer Summe einer doppelten Dicke der Membrane im Bereich der Rollfalte mit einem spezifischen minimal zulässigen Walkradius der Membrane zusammensetzt.

Eine Beschädigung der Membrane wird dadurch verhindert und zugleich der Wirkungsgradverlust reduziert.

Gemäß einer bevorzugten Ausführungsform der Erfindung beträgt ein radialer Abstand zwischen dem Membranteller und dem Abrollbereich bei Nulllage mindestens das Doppelte vom radialen Abstand bei Maximalhub. Die Verluste aufgrund der Walkarbeit in der Rollfalte und der Wirkungsgradverlust werden so weiter optimiert.

Gemäß einer vorteilhaften Ausführung der Erfindung weist das Verstärkergehäuse wenigstens eine erste Gehäuseschale und wenigstens eine zweite Gehäuseschale und zwischen den Gehäuseschalen einen Ringspalt auf, der sich in axiale Richtung vorstreckt und in dem ein Bereich der Membrane angeordnet ist. In einer besonders bevorzugten Weiterbildung der Erfindung ist der Ringspalt derart ausgelegt, dass seine axiale Streckung des mindestens doppelt so groß ist wie sein radiales Spaltmaß.

Dadurch werden die Führung der Rollfalte verbessert, Beschädigungen an deren Übergang zur Dichtwulst vermieden und ein Herausrutschen beziehungsweise Ausknüpfen der Dichtwulstes in den Innenraum des Verstärkergehäuses effektiv verhindert.

Für eine optimierte Werkstoffausnutzung Einsparung von Kosten und Gewicht sieht eine bevorzugte Ausführungsform der Erfindung vor, dass der kegelige Abschnitt sich im Wesentlichen bis zum Ringspalt erstreckt.

Im Folgenden werden die Einzelheiten und Vorteile der Erfindung anhand Figurenbeschreibungen näher erläutert. Dabei wird auf die Beschreibung von allgemein bekannten Aspekten und Funktionen eines gattungsgemäßen Bremskraftverstärkers weitestgehend verzichtet und lediglich auf die erfindungsrelevanten Details eingegangen.

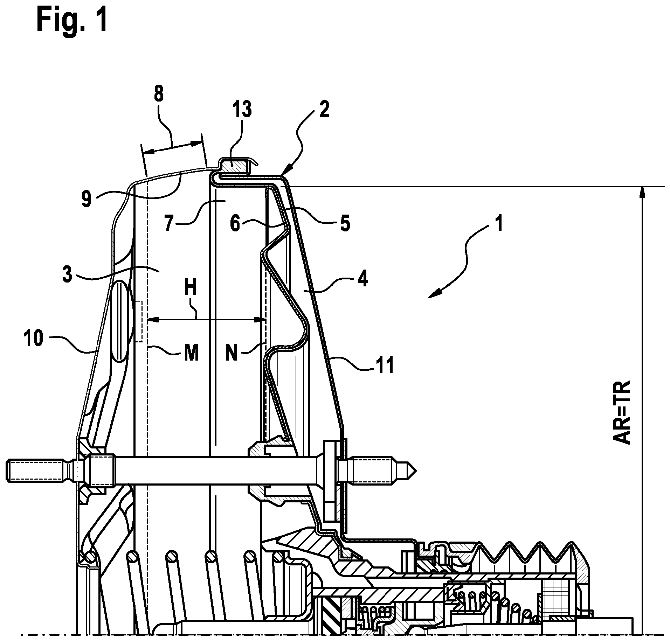

Im Einzelnen zeigt die
Fig.1 beispielhaft eine Axialschnittdarstellung einer Ausführungsform des erfindungsgemäßen Bremskraftverstärkers.

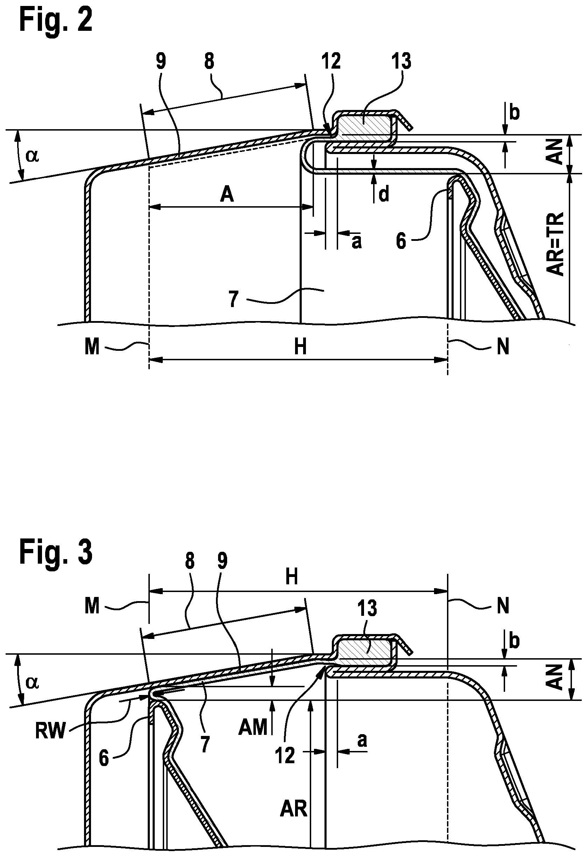

Fig.2 Vergrößerte Darstellung der Ausführungsform nach Fig.1 im Bereich der Rollfalte mit dem Membranteller in Nulllage.
Fig.3 Vergrößerte Darstellung der Ausführungsform nach Fig.1 im Bereich der Rollfalte mit dem Membranteller bei Maximalhub.

### Fig.1

Ein pneumatischer Bremskraftverstärker 1 ist im Wesentlichen rotationssymmetrisch aufgebaut. Er verfügt über ein dünnwandiges Verstärkergehäuse 2. Das Verstärkergehäuse 2 umfasst Gehäuseschalen 10 und 11, die in ihrem radialen Außenbereich miteinander verbunden sind und beinhaltet eine Unterdruckkammer 3 sowie eine Arbeitskammer 4, welche durch eine elastomere Membrane 5 pneumatisch voneinander separiert sind.

Die Verstärkungskraft wird im pneumatischen Bremskraftverstärker 1 durch eine Druckdifferenz zwischen der Unterdrucckammer 3 und der Arbeitskammer 4 erzeugt und in einen steifen Membranteller 6 eingeleitet, welcher daraufhin im Verstärkergehäuse 2 innerhalb eines konstruktiv vorgesehenen Hubbereichs H zwischen einer Nulllage N und einem Maximalhub M axial verfahren wird und die Verstärkungskraft an wirkungsmäßig nachgeschalteten Komponenten überträgt.

Hierbei stützt sich die Membrane 5 in Richtung Unterdrucckammer 3 gegen den Membranteller 6, wobei die pneumatisch wirksame Fläche durch eine projizierte Auflagefläche der Membrane 5 am Membranteller 6 und somit durch den Auflageradius AR definierbar ist. Für einen größtmöglichen Wirkungsgrad soll der Auflageradius AR bei jedem Betriebszustand und bei jeder Hubposition idealerweise gleich dem Außenradius TR des Membrantellers 6 sein.

Zur Ausgleich der Bewegung der Membrane 5 verfügt diese über eine Rollfalte 7, die sich bei der Verschiebung des Membrantellers 6 zwischen der Nulllage N und dem Maximalhub M an einem Abrollbereich 8 an der Innenwandung des Verstärkergehäuses 2 abrollt.

Am radialen Außenrand der Membrane 5 ist eine umlaufende Dichtwulst 13 angeformt, die zwischen den Gehäuseschalen 10 und 11 in einem gesondert ausgeformten ringförmigen Hohlraum pneumatisch dicht eingeklemmt ist.

### Fig.2

Das erfindungsgemäße Verstärkergehäuse 2 weist im Abrollbereich 8 einen kegeligen Abschnitt 9, dessen Axialstreckung A mindestens ein Drittel und vorzugsweise die Hälfte des Hubbereichs H beträgt und dessen Kegelwinkel in einem Bereich zwischen 8° und 10°, vorzugsweise zwischen 8, 5° und 9° liegt und idealerweise 8,8° beträgt.

### Fig.3

Zur Gewährleistung einer dauerhaften Funktion bei einem optimierten Wirkungsgrad und reduziertem Materialaufwand sind die Komponenten des erfindungsgemäßen Bremskraftverstärkers 1 derart ausgelegt, dass ein radialer Abstand AM zwischen dem Membranteller 6 und dem Abrollbereich 8 am Verstärkergehäuse 2 bei Maximalhub M sich einem Wert anstrebt, welcher sich der Summe aus dem Doppelten der Dicke d der Membrane 5 im Bereich der Rollfalte 7 und einem spezifischen minimalen zulässiger Walkradius RW der Membrane 5 annähert, diesen jedoch nicht unterschreitet. Es gilt AM ≥ 2d+RW; AM → 2d+RW.

Der Walkradius RW ist dabei ein minimal zulässiger Biegeradius der Membrane 5, bei dem unter Berücksichtigung der spezifischen Werkstoffeigenschaften und der Dicke d für die gesamte vorgesehene Betriebsdauer des Bremskraftverstärkers 1 eine Rissbildung wegen spannungsbedingter Überbeanspruchung in den Randschichten vermieden wird. Beispielsweise für eine Membrane 5 aus EPDM Werkstoff mit einer Dicke d ≈ 1mm wird vorzugsweise der Walkradius RW ≈ 1,5mm definiert.

Die Anforderungen für den minimal zulässigen Radialabstand AM bei Maximalhub M gilt zwangsweise für die konstruktive Auslegung der langhubigen Ausführung. Bei einer kurzhubigen Ausführung kann innerhalb der Erfindung beispielsweise der Kegelwinkel α gegenüber der langhubigen Ausführung vergrößert werden um den gleichen Radialabstand AM zu ermöglichen oder der Kegelwinkel α kann gleich bleiben, wodurch der Radialabstand AM geringfügig vergrößert wird.

Der Hubbereich H für eine langhubige Ausführung des erfindungsgemäßen Bremskraftverstärkers 1 könnte beispielsweise in einem Bereich zwischen 40 mm und 50 mm liegen und vorzugsweise 46 mm betragen.

Für eine kurzhubige Ausführung des erfindungsgemäßen Bremskraftverstärkers 1 könnte der Hubbereich H beispielsweise in einem Bereich zwischen 30 mm und 40 mm liegen und vorzugsweise 36 mm betragen. Eine daraus ergebende Hubdifferenz zwischen der kurzhubigen und langhubigen Ausführungen von 10 bis 20 mm kann problemlos ohne Wirkungsgradverlust mit einer einzigen standardisierten Ausführung der Membrane 5 realisiert werden.

Das Verstärkergehäuse 2 der gezeigten Ausführungsform des erfindungsgemäßen Bremskraftverstärkers 1 ist derart ausgelegt, dass der radiale Abstand AN zwischen dem Membranteller 6 und dem Abrollbereich 8 bei Nulllage N annähernd und mindestens das Doppelte vom radialen Abstand AM bei Maximalhub M beträgt. Unter Berücksichtigung des vorstehend offenbarten Auslegungsprinzipien für den Abstand AN können damit die Verluste aufgrund der Walkarbeit in der Rollfalte 7 und das Maß deren Blasenbildung in ein optimales Verhältnis zueinander gebracht und der Wirkungsgradverlust so minimiert werden.

Um die Führung der Rollfalte 7 zu verbessern, Beschädigungen an deren Übergang zur Dichtwulst 13 zu vermeiden und ein Herausrutschen beziehungsweise Ausknüpfen der Dichtwulst 13 in den Innenraum des Verstärkergehäuses 2 zu verhindern sind die beiden Gehäuseschalen 10 und 11 derart geformt, dass dazwischen ein axial vorgestreckter Ringspalt 12 gebildet ist. Die Membrane 5 beziehungsweise die Rollfalte 7 verläuft dabei durch den Ringspalt 12.

Das radiale Spaltmaß b des Ringspalts 12 ist dabei wesentlich kleiner als die Dicke der Dichtwulst 13 und nur unwesentlich breiter als die Dicke d der Membrane 5 gestaltet. Die axiale Streckung a des Ringspaltes 12 sollte dabei mindestens genauso groß und vorzugsweise mindestens doppelt so groß wie sein radiales Spaltmaß b ausgelegt werden.

In der gezeigten bevorzugten Ausführungsform des erfindungsgemäßen Bremskraftverstärkers 1 erstreckt sich der kegelige Abschnitt 9 unmittelbar bis zum Ringspalt 12.

### Bezugszeichenliste

- 1: Bremskraftverstärker
- 2: Verstärkergehäuse
- 3: Unterdruckkammer
- 4: Arbeitskammer
- 5: Membrane
- 6: Membranteller
- 7: Rollfalte
- 8: Abrollbereich
- 9: Kegeliger Abschnitt
- 10: Gehäuseschale
- 11: Gehäuseschale
- 12: Ringspalt
- 13: Dichtwulst
- α: Kegelwinkel
- a: axiale Streckung
- A: Axialstreckung
- b: radiales Spaltmaß
- d: Dicke der Membrane
- H: Hubbereich
- M: Maximalhub
- N: Nulllage
- AM: Radialabstand bei Maximalhub
- AN: Radialabstand bei Nulllage
- AR: Auflageradius
- RW: spezifischer minimaler zulässiger Walkradius
- TR: Radius Membranteller

## Patentansprüche

1. Pneumatischer Bremskraftverstärker (1) mit einem Verstärkergehäuse (2), mit wenigstens einer Unterdruckkammer (3) und wenigstens einer Arbeitskammer (4), die in dem Verstärkergehäuse (2) vorgesehen sind und durch eine elastische Membrane (5) pneumatisch voneinander getrennt sind, wobei die Membrane (5) bereichsweise an einem im wesentlichen kreisrunden Membranteller (6) anliegt, der in dem Verstärkergehäuse (2) zwischen einer Nulllage (N) und einem Maximalhub (M) axial verschiebbar ist, wobei ein axialer Abstand zwischen der Nulllage (N) und dem Maximalhub (M) einen Hubbereich (H) des Bremskraftverstärkers (1) definiert, wobei die Membrane eine Rollfalte (7) aufweist, welche bei der Verschiebung des Membrantellers (6) an einem Abrollbereich (8) an einer Innenwandung des Verstärkergehäuses (2) abrollt **dadurch gekennzeichnet, dass** das Verstärkergehäuse (2) im Abrollbereich (8) einen angeschrägten, kegeligen Abschnitt (9) mit einem Kegelwinkel (a) ≥ 8° und einer Axialstreckung (A) > 1/3 * Hubbereich (H) aufweist.

2. Bremskraftverstärker (1) nach Anspruch 1, **dadurch gekennzeichnet, dass** ein radialer Abstand (AM) zwischen dem Membranteller (6) und dem Abrollbereich (8) bei Maximalhub (M) sich mindestens aus einer Summe einer doppelten Dicke(d) der Membrane (5) im Bereich der Rollfalte (7) mit einem spezifischen minimal zulässigen Walkradius (RW) der Membrane (5) zusammensetzt; AM ≥ 2d+RW.

3. Bremskraftverstärker (1) nach Anspruch 2, **dadurch gekennzeichnet, dass** ein radialer Abstand (AN) zwischen dem Membranteller (6) und dem Abrollbereich (8) bei Nulllage (N) mindestens das Doppelte vom radialen Abstand (AM) bei Maximalhub (M)beträgt; AN ≥ 2*AM.

4. Bremskraftverstärker (1) nach Anspruch 1, **dadurch gekennzeichnet, dass** der Kegelwinkel (a) in einem Bereich zwischen 8° und 10° vorgesehen ist.

5. Bremskraftverstärker (1) nach Anspruch 4, **dadurch gekennzeichnet, dass** der Kegelwinkel (a) in einem Bereich zwischen 8,5° und 9° vorgesehen ist.

6. Bremskraftverstärker (1) nach Anspruch 1, **dadurch gekennzeichnet, dass** das Verstärkergehäuse (2) wenigstens eine erste Gehäuseschale (10) und wenigstens eine zweite Gehäuseschale (11) aufweist und zwischen den Gehäuseschalen (10, 11) ein Ringspalt (12) gebildet ist, der sich in axiale Richtung vorstreckt und in dem ein Bereich der Membrane (5) angeordnet ist.

7. Bremskraftverstärker (1) nach Anspruch 6, **dadurch gekennzeichnet, dass** eine axiale Streckung (a) des Ringspaltes (12) mindestens genauso groß ist wie sein radiales Spaltmaß (b).

8. Bremskraftverstärker (1) nach Anspruch 7, **dadurch gekennzeichnet, dass** eine axiale Streckung (a) des Ringspaltes (12) mindestens doppelt so groß ist wie sein radiales Spaltmaß (b).

9. Bremskraftverstärker (1) nach Anspruch 8, **dadurch gekennzeichnet, dass** der kegelige Abschnitt (9) sich im Wesentlichen bis zum Ringspalt (12) erstreckt.

## Claims

1. Pneumatic brake booster (1) having a booster housing (2), having at least one vacuum chamber (3) and at least one working chamber (4) which are provided in the booster housing (2) and which are pneumatically separated from one another by an elastic diaphragm (5), wherein the diaphragm (5) bears in regions against a substantially circular diaphragm plate (6) which is axially displaceable in the booster housing (2) between a zero position (N) and a maximum stroke (M), wherein an axial spacing between the zero position (N) and the maximum stroke (M) defines a stroke range (H) of the brake booster (1), wherein the diaphragm has a rolling fold (7) which, during the displacement of the diaphragm plate (6), rolls on a rolling region (8) on an inner wall of the booster housing (2), **characterized in that** the booster housing (2) has, in the rolling region (8), a tapered, conical portion (9) with a cone angle (α) ≥ 8° and an axial extent (A) > 1/3 * stroke range (H).

2. Brake booster (1) according to Claim 1, **characterized in that** a radial spacing (AM) between the diaphragm plate (6) and the rolling region (8) at maximum stroke (M) is at least a sum of twice the thickness (d) of the diaphragm (5) in the region of the rolling fold (7) with a specific minimum allowable flexing radius (RW) of the diaphragm (5); AM ≥ 2d+RW.

3. Brake booster (1) according to Claim 2, **characterized in that** a radial spacing (AN) between the diaphragm plate (6) and the rolling region (8) at zero position (N) is at least twice the radial spacing (AM) at maximum stroke (M); AN ≥ 2*AM.

4. Brake booster (1) according to Claim 1, **characterized in that** the cone angle (α) is provided in a range between 8° and 10°.

5. Brake booster (1) according to Claim 4, **characterized in that** the cone angle (α) is provided in a range between 8.5° and 9°.

6. Brake booster (1) according to Claim 1, **characterized in that** the booster housing (2) has at least one first housing shell (10) and at least one second housing shell (11) and, between the housing shells (10, 11), there is formed an annular gap (12) which extends forward in an axial direction and in which a region of the diaphragm (5) is arranged.

7. Brake booster (1) according to Claim 6, **characterized in that** an axial extent (a) of the annular gap (12) is at least of the same size as its radial gap dimension (b) .

8. Brake booster (1) according to Claim 7, **characterized in that** an axial extent (a) of the annular gap (12) is at least twice its radial gap dimension (b).

9. Brake booster (1) according to Claim 8, **characterized in that** the conical portion (9) extends substantially to the annular gap (12).

## Revendications

1. Servofrein pneumatique (1) comprenant un boîtier de servofrein (2), au moins une chambre à vide (3) et au moins une chambre de travail (4), qui sont prévues dans le boîtier de servofrein (2) et qui sont séparées pneumatiquement l'une de l'autre par une membrane élastique (5), la membrane (5) venant en appui par endroits sur une plaque de membrane (6) sensiblement circulaire qui peut coulisser axialement dans le boîtier de servofrein (2) entre une position zéro (N) et une course maximale (M), une distance axiale entre la position zéro (N) et la course maximale (M) définissant une zone de course (H) du servofrein (1), la membrane comportant un pli de roulement (7) qui, lorsque la plaque de membrane (6) coulisse, roule sur une paroi intérieure du boîtier de servofrein (2) au niveau d'une zone de roulement (8), **caractérisé en ce que** le boîtier de servofrein (2) comporte dans la zone de roulement (8) une portion conique chanfreinée (9) dont l'angle de cône (α) est ≥ 8° et dont l'extension axiale (A) est > 1/3* la zone de course (H).

2. Servofrein (1) selon la revendication 1, **caractérisé en ce qu'**une distance radiale (AM) entre la plaque de membrane (6) et la zone de roulement (8) pour une course maximale (M) est égale à au moins une somme de deux fois l'épaisseur (d) de la membrane (5) dans la zone du pli du roulement (7) avec un rayon de flexion minimum admissible spécifique (RW) de la membrane (5) ; AM ≥ 2d+RW.

3. Servofrein (1) selon la revendication 2, **caractérisé en ce que** la distance radiale (AN) entre la plaque de membrane (6) et la zone de roulement (8) pour la position zéro (N) est égale à au moins deux fois la distance radiale (AM) pour une course maximale (M) ; AN ≥ 2*AM.

4. Servofrein (1) selon la revendication 1, **caractérisé en ce que** l'angle de cône (α) est prévu dans une plage comprise entre 8° et 10°.

5. Servofrein (1) selon la revendication 4, **caractérisé en ce que** l'angle de cône (α) est prévu dans une plage comprise entre 8,5° et 9°.

6. Servofrein (1) selon la revendication 1, **caractérisé en ce que** le boîtier de servofrein (2) comporte au moins une première coque de boîtier (10) et au moins une deuxième coque de boîtier (11) et un espace annulaire (12), qui s'étend dans la direction axiale et dans lequel une zone de la membrane (5) est disposée, est ménagé entre les coques de boîtier (10, 11) .

7. Servofrein (1) selon la revendication 6, **caractérisé en ce que** l'extension axiale (a) de l'espace annulaire (12) est au moins aussi grande que sa dimension radiale (b).

8. Servofrein (1) selon la revendication 7, **caractérisé en ce que** l'extension axiale (a) de l'espace annulaire (12) est au moins deux fois plus grande que sa dimension radiale (b).

9. Servofrein (1) selon la revendication 8, **caractérisé en ce que** la portion conique (9) s'étend sensiblement jusqu'à l'espace annulaire (12).
